# EUROPEAN PATENT APPLICATION

(11) **EP 0 961 454 A2**
(43) Date of publication of application: **01.12.1999**
(21) Application number: 99108331.2
(22) Date of filing: 28.04.1999
(51) Int. Cl.: H04M 1/00, H04N 1/327

(54) **Information-Processing device**

(30) Priority: 29.05.1998 JP 14982298
(71) Applicant: Sharp Kabushiki Kaisha, Osaka-shi, Osaka 545-8522 (JP)
(72) Inventor: Kinoshita, Yoshio, Yamatokoriyama-shi, Nara 639-1103 (JP)
(74) Representative: MÜLLER & HOFFMANN Patentanwälte

(57) **Abstract**

An information-processing device includes a touch panel for inputting information-processing commands and mode setting instructions, an information-processing section for processing information according to an information-processing command input to the touch panel, a display section for displaying information-processing data, a setting section for setting a cleaning mode to prevent input of the information-processing commands to the touch panel and allow a surface of the touch panel to be cleaned, a communication section for connecting to a communications line to establish communication in response to a state of a hook-switch, a detection section for detecting an on- or off-hook state of the hook-switch, and a control section for controlling the above-mentioned panel and sections. The control section cancels the cleaning mode on receiving, in the cleaning mode, a signal representative of the detected on- or off-hook state of the hook-switch from the detection section.

## Description

### BACKGROUND OF THE INVENTION

### 1.Field of the Invention

The present invention relates to an information-processing device provided with a touch panel as input means which device have the function of switching to a cleaning mode to invalidate an input by the touch panel.

### 2.Description of Related Art

Touch panels are conventionally in widespread use as input devices for word processors, personal computers and the like, Since input to a touch panel is usually executed by a pen or a finger touching an input surface of the touch panel, the input surface becomes dirty with use.

If a user cleans the input surface of the touch panel of a system with a cloth or the like while the system is on, the system judges a touch with the cloth or the like to be input to the input surface, which may possibly cause an unexpected malfunction of the system. For this reason, the touch panel is generally cleaned after the system is closed, for example, after data under processing is temporarily stored in a memory such as a floppy disk or a hard disk and the system is powered down. After the cleaning of the touch panel is finished, the system is re-started, for example, the system is powered on and the stored data and a function to be performed are called.

However, this process of powering off the system and cleaning the input surface of the touch panel is time- and labor-consuming, and thus inefficient. Particularly in the case of a mainframe computer, the closing thereof and the re-starting thereof after the cleaning is over are considerably troublesome. Further in the case of a computer which needs to operate all day, shutting the computer down is out of the question.

On the other hand, for allowing the input surface of the touch panel to be cleaned without powering off the system, a switch for setting a cleaning mode is provided externally to the touch panel. By operating the switch on and off, the cleaning mode is set to temporarily invalidate input to the input surface for the cleaning of the touch panel, and after the cleaning, the system is returned to a normal mode so as to accept input to the input surface.

However, in the case of a small-sized system, to provide such a switch outside the touch panel will raise production costs.

In order to cope with the above-mentioned problems, for example, Japanese Unexamined Patent Publication No. SHO 63(1988)-271628 proposes an information-input device wherein an input-inhibition mode (cleaning mode) can be set and reset in a power-on state of the device regardless of whether there is a touch to the input surface of the touch panel.

Further, this publication also proposes that the input surface (touch panel face) be divided into a first area and a second area, that a button for canceling an input-inhibition mode (cleaning mode) be provided in the second area when the first area is set to the input-inhibition mode, and that a button for canceling the input-inhibition mode be provided in the first area when the second area is set to the input-inhibition mode.

According to the information-input device disclosed in this publication, a switch outside the touch panel need not be provided, the device need not be shut down before cleaning or re-stared after cleaning. Further this proposal solves the problem that, if a button for setting and canceling the cleaning mode is provided like other functional keys on the input surface of the touch panel, the button cannot be actuated for canceling the cleaning mode since an input to the input surface is invalidated when the device is in the cleaning mode.

However, the above-mentioned publication has an inconvenience in that the entire surface of the touch panel cannot be cleaned at a time. Also, since the surface of the touch panel is cleaned area by area by sequentially setting the cleaning mode in the areas of the touch panel, a careful attention is required when cleaning near the boundary between the two areas. For, if an accidental touch occurs in one of the areas which is not in the cleaning mode, the touch is judged as input to the input surface and the device malfunctions unexpectedly.

### SUMMARY OF THE INVENTION

The present invention provides an information-processing device which includes a touch panel for inputting information-processing commands and mode setting instructions; an information-processing section for processing information according to an information-processing command input to the touch panel; a display section for displaying information-processing data; a setting section for setting a cleaning mode so as to prevent input of the information-processing commands to the touch panel and allow a surface of the touch panel to be cleaned; a communication section for connecting to a communications line to establish communication in response to a change of a state of a hook-switch by operation of a handset; a detection section for detecting an on- or off-hook state of the hook-switch; and a control section for controlling the above-mentioned panel and sections. The control section cancels the cleaning mode on receiving, in the cleaning mode, a signal representative of the detected on- or off-hook state of the hook-switch from the detection section.

According to the present invention, there can be provided an information-processing device wherein the cleaning mode can be set, for example, by actuating a button mounted on the touch panel, the entire surface of the touch panel can be cleaned while input to the touch panel is prevented and the cleaning mode can be canceled by use of the detection signal representative of a change to on or off of the hook-switch provided in the communication section.

These and other objects of the present application will become more readily apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a block diagram illustrating a general construction of an information-processing device in accordance with an embodiment of the present invention;
Fig. 2 shows block diagrams illustrating constructions of a ROM and a RAM adopted to the information-processing device in accordance with the embodiment of the present invention;
Fig. 3 is a schematic perspective view illustrating the appearance of the information-processing device in accordance with the embodiment of the present invention;
Fig. 4 is a schematic view illustrating an exemplary screen of a combination touch panel-display section in a normal mode in accordance with the embodiment of the present invention;
Fig. 5 is a schematic view illustrating an exemplary cleaning-node screen (1) displayed by the combination touch panel-display section in accordance with the embodiment of the present invention;
Fig. 6 is a schematic view illustrating an exemplary cleaning-mode screen (2) displayed by the combination touch panel-display section in accordance with the embodiment of the present invention;
Fig. 7 is a flowchart illustrating a process of a cleaning-mode operation in accordance with the embodiment of the present invention.

### DESCRIPTION OF THE PREFERRED EMBODIMENTS

The information-processing device of the present invention mainly includes a display section, a touch panel, a communication section, an information-processing section, a detection section, a setting section and a control section.

The display section may be composed of a liquid crystal display (LCD), a plasma display or the like.

The touch panel may include a transparent tablet of an electrostatic induction type, of an electro-magnetic induction type or of a resistance film type and is preferable formed on a screen of the display section. The touch panel is for inputting various information- processing commands and various instructions about setting modes.

The communication section may include a net control unit (NCU), a handset (a transmitter and receiver) including a hook-switch and a dial circuit. The communication section connects to a communications line to establish communication in response to the state of the hook-switch of the handset.

The information-processing section which processes information on the basis of the information-processing command input to the touch panel and outputs the processed information to the display section, the detection section which detects the on- or off-hook state of the hook-switch and outputs a signal of the detected state, the setting section which sets to the touch panel the cleaning mode for inhibiting the input of the information-processing commands to the touch panel and allowing the surface of the touch panel to be cleaned, and the control section which controls the above-mentioned panel and sections may preferably be comprised of a computer having a CPU, a ROM, a RAM and an I/O port.

The ROM may store programs which function as the control section, the information-processing section, the detection section and the setting section and data of icons representative of information-processing commands, modes and the like which icons are displayed on the display section.

The setting section may be constructed as buttons (or icons) on the touch panel, which can be actuated for setting various modes. For example, the cleaning mode for cleaning the touch panel can be set without powering off the device.

The control section, on receiving the detection signal about the on- or off-hook state of the hook-switch from the detection section in the cleaning mode, enables the cleaning mode to be canceled.

According to the present invention, there can be provided an information-processing device wherein the cleaning mode can be set by actuating the button mounted on the touch panel, the entire surface of the touch panel can be cleaned at a time while input to the touch panel is being inhibited, and the cleaning mode can be canceled by use of the detection signal on the on- or off-hook state of the hook-switch provided in the communication section.

The control section may be so constructed to cancel the cleaning mode on receiving the detection signal representative of the off-hook state of the hook-switch from the detection section in the cleaning mode which has been set in the on-hook state of the hook-switch.

With the above-described construction, when the cleaning of the surface of the touch panel is finished, the cleaning mode can be cancelled with reliability by an easy operation of picking up the handset to make the hook-switch off.

The control section may be so constructed to cancel the cleaning mode on receiving the detection signal representative of the on-hook state of the hook-switch from the detection section in the cleaning mode in the off-hook state of the hook-switch.

With the above-described construction, the cleaning mode is set in such a state that the handset is picked up, and when the cleaning of the surface of the touch panel is finished, the cleaning mode can be cancelled with reliability by an easy operation of hooking on the handset to make the hook-switch on.

The control section may be so constructed to execute such a control that a communication from an external information-processing device can be received when the device is in the cleaning mode and the hook-switch is in the off-hook state, and that if the touch panel is in an untouched state when the control section receives a signal indicating the receipt of the communication from the communication section, the control section cancels the cleaning mode.

With the above-described construction, the cleaning mode is set in the state that the handset is picked up, and if a signal or a message arrives from an external information-processing device during the cleaning of the touch panel, the cleaning mode is cancelled after the touch panel becomes in a non-touched state. Therefore, the device can operate normally to answer the signal or message.

The control section may be so constructed to cancel the cleaning mode when a predetermined period of time has elapsed without the touch panel being touched in the cleaning mode.

With the above-described construction, the cleaning mode is automatically cancelled when the touch panel has not been touched for the predetermined time after the cleaning of the touch panel is finished. Accordingly, it is possible to avoid a mis-operation of forgetting to cancel the cleaning mode.

Now the present invention is explained in further detail by way of embodiment thereof with reference to the accompanying figures. However, the embodiment should not be construed to limit the scope of the present invention.

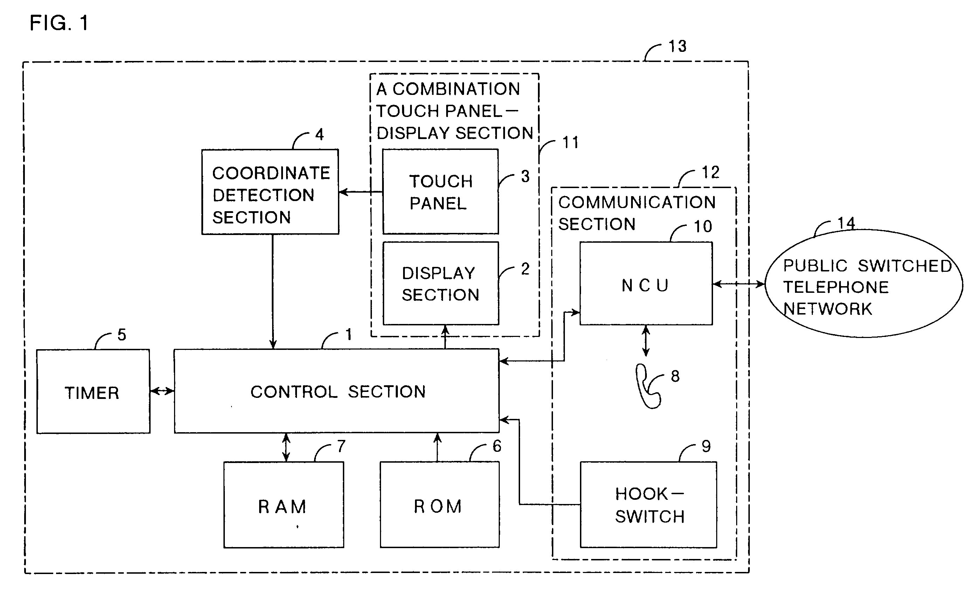

Fig. 1 is a block diagram illustrating a general construction of an information-processing device in accordance with the embodiment of the present invention. In Fig. 1, the reference numeral 13 generally denotes an information processing device of the embodiment.

The reference numeral 1 denotes a control section which controls the overall operation of the device. The control section 1 is comprised particularly of a CPU of a computer and also functions as an information-processing section for processing information on the basis of an input information-processing command and also as a detection section for detecting the on- or off-hook state of a hook-switch.

The reference numeral 2 denotes a display section which displays output of various information. The display section is comprised of a liquid crystal display, a plasma display, a CRT display or the like.

The reference numeral 3 denotes a touch panel comprised of a transparent tablet. The touch panel 3 is bonded closely onto a screen of the display section 2, so as to form a combination touch panel-display section 11. The combination touch panel-display section 11 functions also as an input device.

By softly pushing an icon representative of an information-processing command or a mode displayed on the display section 2, with a finger or a tip of a pen through the touch panel 3, the information-processing command or mode is input to the control section 1.

The reference numeral 4 denotes a coordinate detection section which converts an input signal of the information-processing command or the mode output by the touch panel 3 into coordinate data and transmits the resulting coordinate data to the control section 1.

The control section 1 recognizes the information-processing command or the mode from the transmitted coordinate data and executes the recognized information processing.

The reference numeral 5 denotes a timer which counts a period time for which the touch panel remains untouched without interruption. The timer 5 is comprised of a counter, a register and the like.

The reference numeral 6 denotes a ROM which stores a control program and date for causing the control section 1 to operate.

The reference numeral 7 denotes a RAM which temporarily stores control data necessary for causing the control section 1 to operate and data under processing.

The reference numeral 8 denotes a handset (a transmitter and receiver) necessary for telephone functions which is used for making and receiving telephone calls.

The reference numeral 9 denotes a hook-switch which transmits an on/off signal representative of the on- or off-hook state of the handset 8.

The reference numeral 10 denotes an NCU which controls connection to a public switched phone network 14 in response to the on- or off-hook state of the hook-switch 9 by handling the handset 8.

The NCU 10, the handset 8 and the hook-switch 9 functions as parts of a communication section 12.

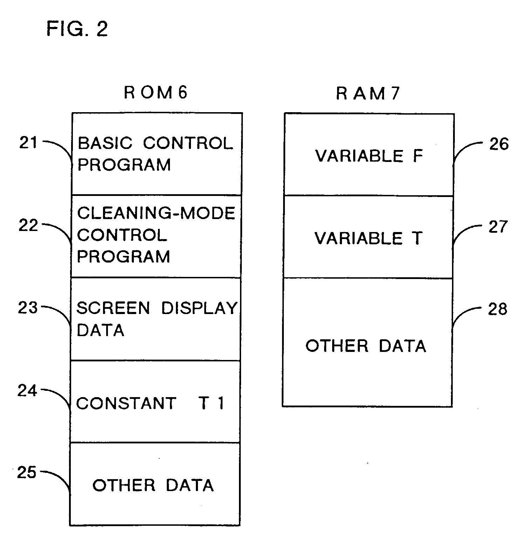

Fig. 2 shows block diagrams illustrating constructions of a ROM and a RAM adopted to the information-processing device in accordance with the embodiment. In Fig. 2, the ROM 6 stores a basic control program 21 for causing the whole information-processing device to operate, a cleaning-mode control program 22 for setting the cleaning mode, monitoring conditions to reset the cleaning mode and shifting from the cleaning mode to a normal mode, screen display data 23 for displaying on the display section 2, other internal data 25 than the screen display data and a constant (T1) 24 for the upper limit count of the timer 5 used in the cleaning mode.

The RAM 7 stores variables (F) 26 used in the cleaning mode, variables (T) 27 also used in the cleaning mode and other data 28.

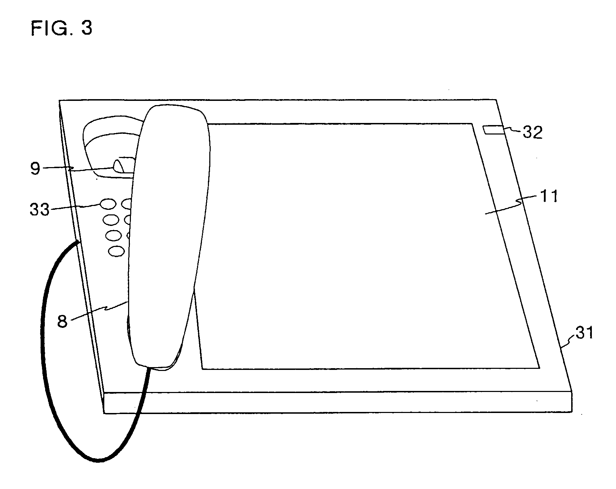

Fig. 3 is a schematic perspective view illustrating the appearance of the information-processing device in accordance with the embodiment. In Fig. 3, like numerals denotes like constituents in Fig. 1.

The reference numeral 8 denotes a handset which is used for making and receiving telephone calls.

The reference numeral 9 denotes a small-size hook-switch which becomes on-hook when the handset 8 is put thereon and becomes off-hook when the handset 8 is picked up.

The reference numeral 11 denotes a combination touch panel-display consisting of a touch panel 3 for inputting various information by touching it with a finger or a pen and a display section 2 for displaying various types of information. In this embodiment, the combination touch panel-display is composed of a transparent tablet of resistance film type and a liquid crystal display.

The reference numeral 31 denotes a housing. The reference numeral 32 denotes a power indicator which indicates whether or not the device is powered on. The reference numeral 33 denotes dial keys for use at a power failure. Normally, dial buttons for making telephone calls are displayed on the combination touch panel-display 11. However, when power fails, the display section 2 cannot be used. That is the reason the dial keys 33 are provided. When power fails, it is possible to dial a number by pressing dial keys.

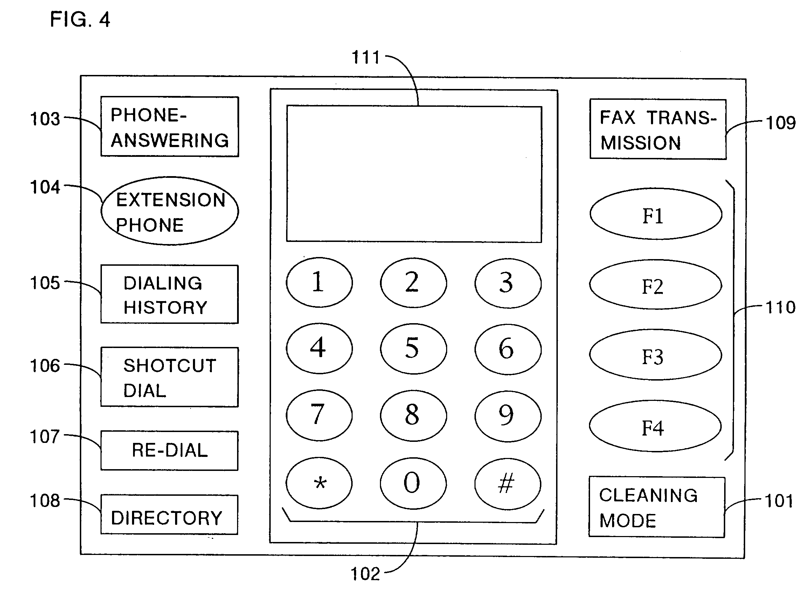

Fig. 4 is a schematic view illustrating an exemplary screen of the combination touch panel-display section in a normal mode in accordance with the embodiment. Referring to Fig. 4, the information-processing commands can be provided to the control section 1 by pushing buttons 101 to 110 of the touch panel.

The reference numeral 101 denotes a cleaning-mode button for instructing a shift to the cleaning mode.

The reference numeral 102 denotes a set of dial buttons which are used for making a call.

The reference numeral 103 denotes a button for instructing automatic telephone answering and recording when a user is away.

The reference numeral 104 denotes a button which is used for communicating with an extension telephone.

The reference numeral 105 denotes a "dial history" button for invoking a screen which allows the user to call a recently dialed telephone number in an easy step.

The reference numeral 106 denotes a "short-cut dial" button for invoking a screen which allows the user to call a frequently dialed telephone number in an easy step.

The reference numeral 107 denotes a "re-dial" button which is used for making a call to the last telephone number dialed.

The reference numeral 108 denotes a "telephone number book" button for invoking a screen which displays frequently dialed telephone numbers, their names and the like stored in the RAM 7.

The reference numeral 109 denotes a "Fax transmission" button for sending a facsimile.

The reference numeral 110 denotes other functional keys F1 to F4.

The reference numeral 111 denotes a telephone call data display section for displaying a dialed telephone number, a telephone charge for a current call and the like.

Further detailed explanation is not given here to the functions of 102 to 111 because they do not have direct relation to the present invention.

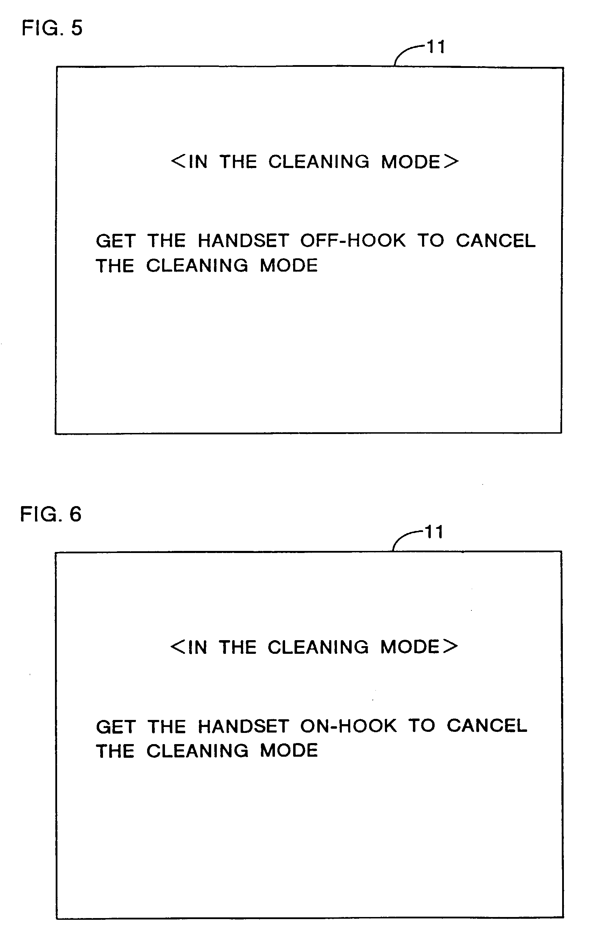

Fig. 5 is a schematic view illustrating an exemplary screen in the cleaning mode (1) displayed by the combination touch panel-display section in accordance with the embodiment. As shown in Fig. 5, when the cleaning-mode button 101 is actuated and the device shifts to the cleaning mode while the handset is on-hook, the message "Get the handset off-hook to cancel the cleaning mode" appears on the screen of the combination touch-panel-display section 11, so that the user can easily find how to clear the cleaning mode.

Fig. 6 is a schematic view illustrating an exemplary screen in the cleaning mode (2) displayed by the combination touch panel-display section in accordance with the embodiment. As shown in Fig. 6, when the cleaning button 101 is actuated and the device shifts to the cleaning mode while the handset is off-hook, the message "Get the handset on-hook to cancel the cleaning mode" appears on the screen of the combination touch-panel-display section 11, so that the user can easily find how to clear the cleaning mode.

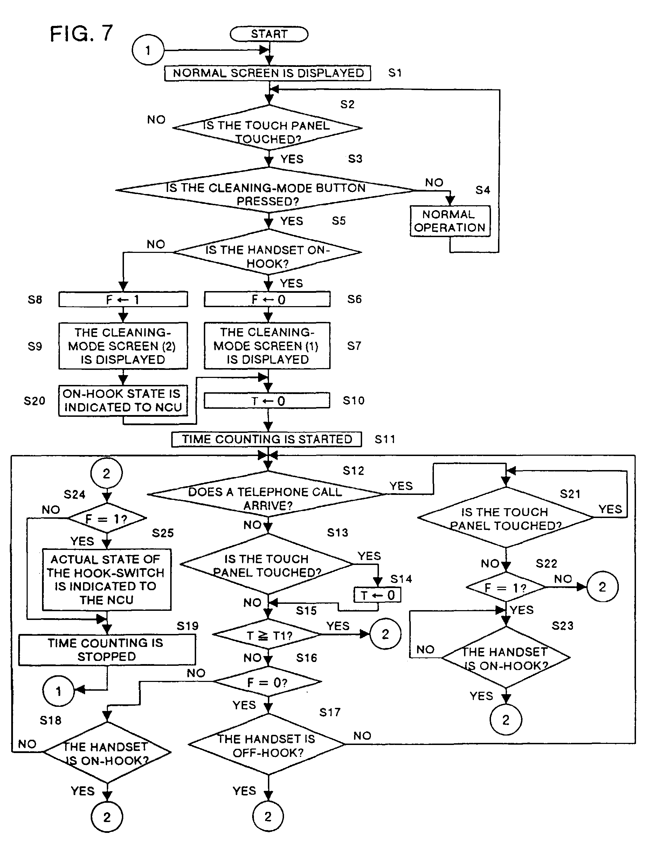

Fig. 7 is a flowchart illustrating a process of a cleaning-mode operation in accordance with the embodiment of the present invention. In Fig. 7, the cleaning-mode operation of the embodiment is executed by the control section 1 based on the cleaning-mode control program 22 stored in the ROM 6.

Step S1 : As an initial state, the combination touch panel-display section 11 displays a normal-mode screen.

Step S2 : In this state, it is checked whether or not input is made to the touch panel 3. If there is any input to the touch panel 3, the input is transmitted to the control section 1 via the coordinate detection section 4, and the process goes to Step S3.

Step S3 : It is checked where or not the input is the actuation of the cleaning-mode key 101. If not, the process goes to Step S4.

Step S4 : A normal operation (related to the pressing of any of the buttons 102 to 110) is executed.

With this state on, if the touch panel 3 is cleaned, a random touch on the touch panel 3 is taken as a regular information-processing input to the device, which may cause an unintended malfunction.

Therefore, in order to clean the touch panel 3 while at the same time avoiding such malfunction, if the cleaning-mode button 101 provided on the touch panel 3 is pressed, this input is transmitted to the control section 1 and the process advances from Step S3 to the cleaning-mode steps commencing from Step 5.

Once the process goes to the cleaning-mode operation, a touch on the touch panel 3 is not regarded as an input to the touch panel 3 any more, and the user can clean the touch panel without worrying about the above-mentioned malfunction.

Step S5 : It is checked whether or not the handset is on-hook.

Step S6 : The state of the hook-switch 9 when the device is shifted to the cleaning mode is stored in the RAM 7. If the hook-switch 9 is in the on-hook state, a "0" is set for the variable F.

Step S7 : The normal-mode screen is changed to a cleaning-mode screen. Since the device is shifted to the cleaning mode while the handset is on-hook, the massage "Get the handset off-hook to cancel the cleaning mode" is displayed on the screen, as shown in the cleaning-mode screen (1) of Fig. 5.

Step S8 : If the hook-switch 9 is in the off-hook state, a "1" is set for the variable F.

Step S9 : The normal-mode screen is changed to a cleaning-mode screen. Since the device is shifted to the cleaning mode while the handset is off-hook, the massage "Get the handset on-hook to cancel the cleaning mode" is displayed on the screen, as shown in the cleaning-mode screen (2) of Fig. 6.

Step S20 : In the case where the device is shifted to the cleaning mode while the handset is off-hook, the line is regarded as being occupied, and therefore, the line cannot be connected in response to an external telephone or facsimile call.

In order to cope with this inconvenience, the control section 1 of the embodiment is so constructed to indicate a pseudo on-hook state to the NCU 10 when the device is in the cleaning mode if the hook-switch 9 is in the off-hook state.

With this construction, the NCU 10 judges on the basis of the indication by the control section 1 that the hook-switch is on-hook, so that the device answers a call from an external device.

Step S10 : An initial value "0" is set for a variable T of the timer 5.

Step S11 : The timer 5 starts to count. After the timer 5 starts counting operation, an interruption signal (i.e., a clock signal) is regularly sent to the control section 1, which in turn increments the value of the variable T one by one. Thus the variable T increases with the elapse of time.

The following steps S12 to S18 are related to the detection of an invent (arrival of a telephone call) which leads to the cancellation of the cleaning mode.

Step S12 : The NCU 10 monitors the arrival of an external telephone call. If there arrives one, the process goes to Step S21.

Step S21: It is monitors whether or not the touch panel 3 is touched. This Step S21 is for avoiding the risk of an unintentional input being made to the touch panel 3 by a touch thereto during cleaning if the cleaning mode is automatically cleared by the arrival of the telephone call while the touch panel 3 is still being cleaned. That is, the process does not go to the next step until the user, who notices the arrival of the telephone call by a ring of a telephone bell, stops cleaning and takes his/her hand off the touch panel 3. Thus, the cleaning mode is canceled at a proper timing.

Step S22 : Whether or not the variable F is 1 is checked. If the variable F is 0, that is, if the device has been shifted to the cleaning mode with the hook-switch in the on-hook state, the process goes to Step S19.

Step S19 : The timer 5 stops counting, and the normal-mode screen in Step S1 is displayed again. Then the user can pick up the handset to start answering the call.

If the variable F is 1 in Step S 22, the process goes to Step S23. That is, if the device has been shifted to the cleaning mode with the hook-switch in the off-hook state, the action of hooking on the hand set 8 is required before the user starts answering to the call.

Step S23 : Wait for the handset 8 to be on-hook. When the handset 8 becomes on-hook, the process goes to Step S24.

Step S24 : Whether or not the variable F is 1 is checked. If so, the process goes to Step S25.

Step S25 : The control section 1, which has indicated the pseudo on-hook state to the NCU 10 so far, indicates the actual hook state based on the on- or off- signal from the hook-switch 9.

Thereafter, the process goes to Step S19, the counting operation of the timer 5 is stopped, and the normal-mode screen of Step S1 is displayed again.

In the steps S13 to S15, it is monitored whether or not a touch is given to the touch panel 3 within a predetermined time T1 in the cleaning mode.

Step S13 : The presence of a touch to the touch panel 3 is monitored.

Step S14 : If the touch panel 3 is touched, the variable T of the timer 5 which has been incremented is reset to 0.

If the touch panel 3 is not touched for the predetermined time T1 since the timer 5 starts to count, that is, if the variable T of the timer 5 is not reset as described in Step 14 for the predetermined time T1, the process goes to Step S15.

Step S15 : It is checked whether the variable T exceeds the predetermined value T1.

If the variable T exceeds the limit T1, the process goes to Steps S24 and S25. For the case where the device has been shifted to the cleaning mode in the off-hook state, the NCU 10 becomes informed of the actual hook state according to the on/off signal from the hook-switch 9. Then the process goes to Step 19, where the timer 5 stops counting, and the normal-mode screen of Step 1 is displayed again.

If the variable T does not exceed the limit T1, the process goes to Step S16.

Step S16 : Whether or not the variable F is 0 is checked. In the next step, the state of the hook-switch 9 is checked and the process goes to two different ways depending upon the state of the hook-switch 9 at the moment when the device is shifted to the cleaning mode.

Step S17 : If the variable F is 0 in Step 16, that is, if the handset is on-hook at the moment of shifting to the cleaning mode, it is monitored whether or not the present state is off-hook. If so, the process goes through Steps S24, S25 and S19, and then the normal-mode screen is displayed again. If not, the process goes to Step S12, and the cleaning mode is continued.

Step S18 : If the variable F is 1 in Step 16, that is, if the handset is off-hook at the moment of shifting to the cleaning mode, it is checked whether or not the present state is on-hook. If so, the process goes through Steps S24, S25 and S19, and then the normal-mode screen is displayed again. If not, the process goes to Step S12, and the cleaning mode is continued.

As understood from the cleaning-mode process in the above-described embodiment, the cleaning mode can be set by actuating the button provided on the touch panel and can be cancelled surely by operating the handset, without providing a special switch for canceling the cleaning mode. Since the area of the touch panel need not be divided into an input-accepting area and an input-protect area, the entire face of the touch panel can be cleaned freely.

Even if the cleaning mode is set with the handset lifted up (i.e., off-hook), the NCU 10 recognizes the pseudo on-hook state, and therefore, an external telephone and facsimile call can be received. Furthermore, when an external telephone call arrives, the cleaning mode is canceled after the touch panel becomes untouched, for enabling communication wherewith. Therefore, it is possible to answer the telephone call by a smooth operation.

Since the cleaning mode is automatically canceled if the touch panel is not touched for the predetermined time in the cleaning mode, the cleaning mode can be ended without any particular operation. Furthermore, it is possible to avert a human error of forgetting to cancel the cleaning mode.

According to the present invention, it is possible to set the cleaning mode by actuating a button mounted on the touch panel, clean the whole face of the touch panel at a time while an input to the touch panel is prevented, and reset the cleaning mode by use of a detection signal about the on/oft of the hook-switch provided in the communication section.

## Claims

1. An information-processing device comprising:
a touch panel for inputting information-processing commands and mode setting instructions;
an information-processing section for processing information according to an information-processing command input to the touch panel,
a display section for displaying information-processing data;
a setting section for setting a cleaning mode so as to prevent input of the information-processing commands to the touch panel and allow the touch panel to be cleaned;
a communication section for connecting to a communications line to establish communication in response to a change of a state of a hook-switch by operation of a handset;
a detection section for detecting an on- or off-hook state of the hook-switch; and
a control section for controlling the above-mentioned panel and sections,
wherein the control section cancels the cleaning mode on receiving, in the cleaning mode, a signal representative of the detected on- or off-hook state of the hook-switch from the detection section.

2. The information-processing device according to claim 1, wherein the control section cancels the cleaning mode on receiving the signal representative of the off-hook state of the hook-switch from the detection section in the cleaning mode which has been set in the on-hook state of the hook-switch.

3. The information-processing device according to claim 1, wherein the control section cancels the cleaning mode on receiving the signal representative of the on-hook state of the hook-switch from the detection section in, the cleaning mode which has been set in the off-hook state of the hook-switch.

4. The information-processing device according to claim 1, wherein the control section has such a control that allows a communication from an external information-processing device when the device is in the cleaning mode and the hook-switch is in the off-hook state, and if the touch panel is in an untouched state when the control section receives a signal indicating the arrival of the communication from the communication section, the control section cancels the cleaning mode.

5. The information-processing device according to claim 1, wherein the control section cancels the cleaning mode if the touch panel remains in an untouched state for a predetermined time in the cleaning mode.

6. The information-processing device according to claim 1 which constitutes a telephone including the touch panel, the information-processing section, the display section, the setting section, the communication section, the handset, the detection section and the control section.

7. The information-processing device according to claim 1 which constitutes a facsimile machine including the touch panel, the information-processing section, the display section, the setting section, the communication section, the handset, the detection section and the control section.
